# EUROPEAN PATENT SPECIFICATION

(11) **EP 2 660 102 B1**
(45) Date of publication and mention of the grant of the patent: **19.11.2014**
(21) Application number: 12425083.8
(22) Date of filing: 03.05.2012
(51) Int. Cl.: B60P 3/12

(54) **Equipment for recovering broken-down vehicles and system provided with such equipment**
Einrichtung zum Bergen liegengebliebener Fahrzeuge und System mit solch einer Einrichtung
Équipement pour récupérer des véhicules en panne et système muni d'un tel équipement

(43) Date of publication of application: 06.11.2013
(73) Proprietor: Omars S.r.l., 12100 Cuneo (IT)
(72) Inventor: Andreis, Renato, 12100 Cuneo (IT)
(74) Representative: Robba, Pierpaolo

(56) References cited:
- WO-A1-2006/055863
- US-A- 4 674 943
- US-A1- 2004 105 746
- US-A1- 2005 111 949
- US-A1- 2006 045 707

## Description

### Technical field

The present invention relates to an equipment and a system in particular for recovering broken-down vehicles.

### Prior Art

Use of equipment and systems for recovering broken-down vehicles is known in the art. Yet, the known systems suffer from a number of drawbacks, in particular concerning the bulk while the help vehicle on which such systems are mounted is travelling and the robustness of the system.

US20040105746 discloses a wheel lift tow device for a tow truck including a centrally located extendable support beam having a cross bar pivotably attached to it, so that it can be oriented obliquely for towing obliquely placed disabled cars, especially for front wheel drive vehicles. The telescoping slider arms of the cross bar provide literal movement for a pair of swivel arm scoops, or claws, which cradle and lift a pair of wheels of the disabled vehicle.

US4674943 discloses a wheel lift type vehicle lifting and towing device which includes an extensible and tiltable boom extending rearwardly from a towing vehicle when in use and provided on its end with a pair of wheel receiving members for engaging the wheels of a vehicle to be towed, and then lifting and towing the vehicle. The wheel receiving members are comprised of a fixed prong, and a movable L-shaped prong which may be folded to a storage position when not rin use.

### Description of the invention

It is an object of the present invention to provide an equipment for a system, in particular for recovering a broken-down vehicle.

According to another aspect of the present invention, there is provided a system of the kind mentioned above, which is capable of reducing the bulk of the help vehicle on which the system is mounted.

According to the present invention, the above and other objects are achieved by means of an equipment and a system as claimed herein.

It is to be intended that the appended claims are integral part of the technical teaching provided herein in the description in respect of the present invention.

### Brief Description of the Figures

Further features and advantages of the present invention will become apparent from the following detailed description, given only by way of non limiting example, with reference to the accompanying drawings, in which:
- Fig. 1 is a perspective view of an equipment and a system for recovering broken-down vehicles according to the present invention;
- Figs. 2a to 2d are elevation views showing a sequence of the arrangements that can be taken by the equipment according to the invention during recovery of a vehicle; and

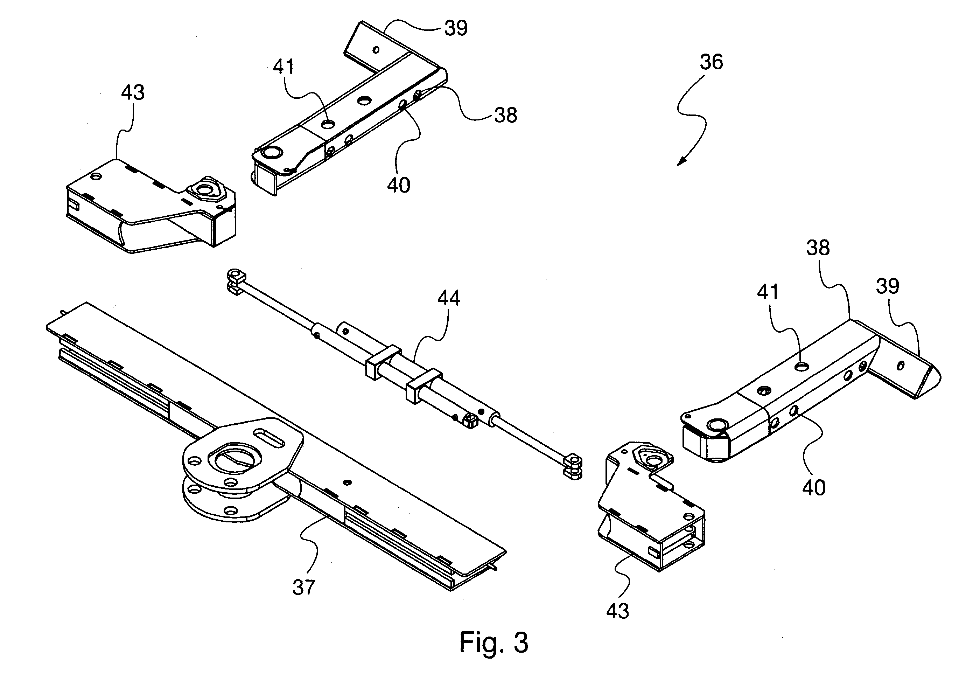

- Fig. 3 is an exploded view of the equipment according to the invention

### Description of a Preferred Embodiment

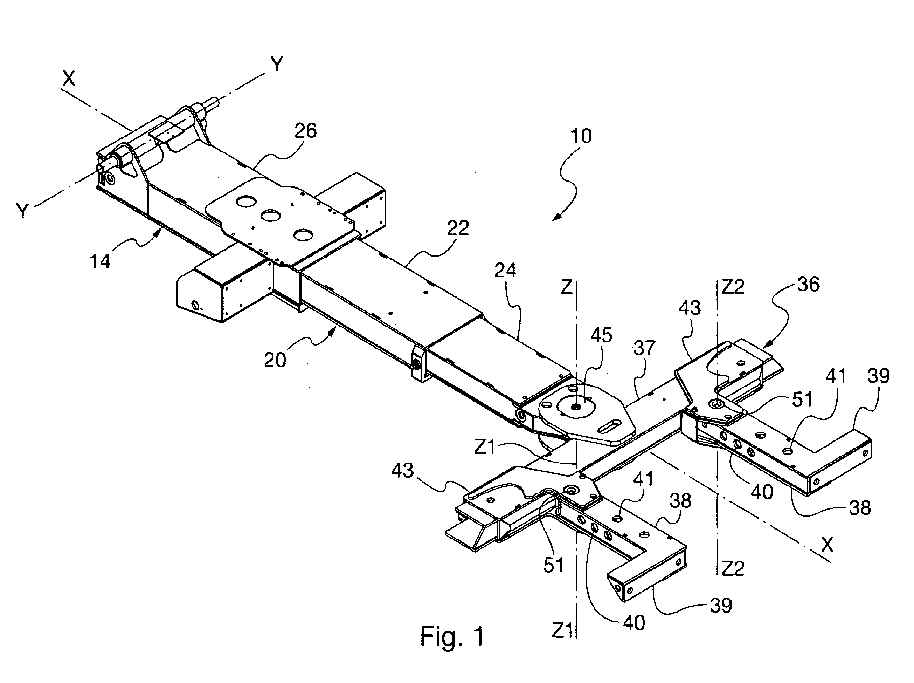

Referring to Fig. 1, an exemplary embodiment of a system for recovering broken-down vehicles according to the present invention is denoted by reference numeral 10. System 10 is intended to be mounted on the frame of a help vehicle, such as for instance a breakdown truck, for instance at the end of such a frame.

Referring to Fig. 1, system 10 includes an equipment or fork assembly 36 associated with a movable body 14 and arranged to lift a pair of wheels, mounted on a same axle, of a broken-down vehicle. Movable body 14, of known type, can be associated with a fixed support structure, mounted for instance on the vehicle frame. For instance, movable body 14 mainly extends in longitudinal direction.

In the present detailed description, the terms "longitudinal", "transverse" and "lateral" will be used to define directions or orientations of different components relative to movable body 14 of system 10.

It is intended that the above terms have the following meaning:
- the term "longitudinal" refers to a direction or axis substantially coinciding with or parallel to the longitudinal axis shown at X-X in fig. 1;
- the term "transverse" refers to a direction or axis substantially perpendicular to longitudinal axis X-X and substantially coinciding with or parallel to transverse axis Z-Z shown in fig. 1; and
- the term "lateral" refers to a direction or axis substantially perpendicular to longitudinal axis X-X and transverse axis Z-Z and substantially coinciding with or parallel to lateral axis Y-Y shown in fig. 1.

System 10 preferably includes a longitudinal extendable device 20 connected to movable body 14 and arranged to be extended in controlled way from a retracted condition to an extended condition in a longitudinal direction or axis X - X relative to movable body 14. Longitudinal extendable device 20 acts as an appendage allowing longitudinally extending movable body 14 depending on the operating needs.

Preferably, longitudinal extendable device 20 is a telescopic device and includes, for instance, a first tubular element 22 and a second tubular element 24 arranged to slide inside each other.

In a preferred manner, movable body 14 has a longitudinal portion 26. In a further preferred manner, longitudinal portion 26 is hollow and longitudinal extendable device 20, for instance, tubular elements 22, 24 thereof, is arranged to slide inside it. For instance, longitudinal extendable device 20 includes an actuating member of a kind known to the skilled in the art and capable of driving the displacement of tubular elements 22, 24 through longitudinal portion 26. Preferably, the actuating member provides for an actuation by a linear actuator, for instance a fluid driven double-effect cylinder.

Referring to Fig. 1, system 10 preferably further includes a transverse appendage, not shown in the drawing, integral for rotation with movable body 14, in such a way as to allow the oscillation of movable body 14 in correspondence of lateral oscillation axis Y - Y.

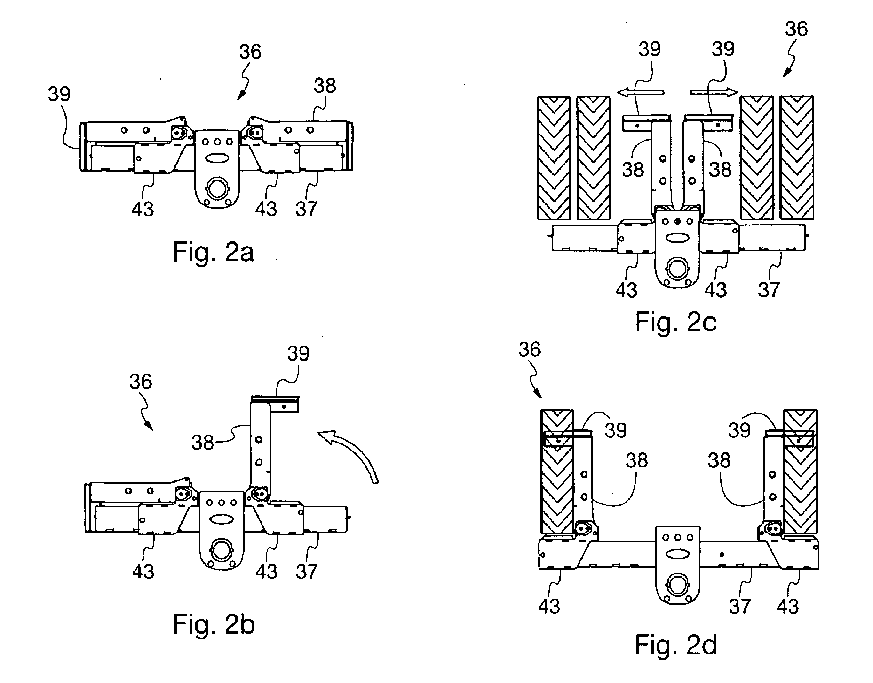

As shown in Figs. 2c and 2d, the equipment or fork assembly 36 associated with movable body 14 is arranged to lift a pair of wheels, mounted on a same axle, both of vehicles with a single-wheel axle and of vehicles with twin-wheel axle.

Preferably, fork assembly 36 is connected with movable body 14 via longitudinal extendable device 20. Preferably, fork assembly 36 is rotatably mounted, for instance pivotally connected through a pivot pin 45, relative to longitudinal extendable device 20, so as to rotate about a transverse yaw axis Z-Z (Fig. 1), substantially transversal to longitudinal sliding axis X-X of longitudinal extendable device 20. Advantageously, fork assembly 36 is mounted in correspondence of the second tubular element 24.

Referring to the drawings, fork assembly 36 according to the invention has substantially a yoke-like shape defined by a bar 37 oriented in lateral direction, on which two slides 43 are slidably mounted in adjustable manner.

For instance, bar 37 includes an actuating member of a kind known to the skilled in the art, which is connected to slides 43 and is capable of driving their displacement. The actuating member provides for an actuation by a linear actuator 44, for instance a fluid driven double-effect cylinder, of which a first end is connected to one slide 43 and the other end is connected to the second slide.

Preferably, bar 37 is connected with movable body 14 via longitudinal extendable device 20.

Preferably, bar 37 is rotatably mounted, for instance is pivotally connected through a pivot pin 45, relative to longitudinal extendable device 20, so as to rotate about transverse yaw axis Z - Z (Fig. 1)

Two arms 38 are associated with bar 37. They are preferably connected to bar 37 via slides 43 and are arranged to cooperate with the bar in order to lift a pair of wheels, mounted on the same axle, of a broken-down vehicle.

More particularly, each arm 38 is rotatably mounted on the respective slide 43, for instance the arms are pivotally connected to the slide by means of a hinge 51. Each arm is arranged to rotate about a respective transverse axis Z1-Z1 and Z2-Z2, substantially transversal to the axis of bar 37 and to longitudinal sliding axis X-X of longitudinal extendable device 20.

The hinge 51 is located at one end of arm 38.

Arms 38 are arranged to rotate between a first, travelling position of the fork assembly (Fig. 2a), in which they are oriented in lateral direction, parallel to bar 37 and preferably in contact therewith and7or with slides 43, and a second, operating position of the fork assembly (Figs. 1 and 2d), in which they are oriented in longitudinal direction.

Each arm 38 has a respective outward projecting lateral extension 39 arranged to be placed under the wheel to be lifted, and a plurality of lateral seats 40 and upper seats 41, for instance holes.

Lateral seats 40 are arranged to house known pulleys for towing the broken-down vehicle by means of a rope and a winch of known type, whereas upper seats 41 are arranged to house rotatable or orientable forks, also of known type, in order to lift the axle of the broken-down vehicle.

In the operating position, lateral extensions 39, arms 38, bar 37 and slides 43 define respective housings for the wheels of the broken-down vehicle to be lifted, and the position of arms 38 is adjusted, by displacing slides 43 to which arms 38 are hinged, depending on the distance between the wheels of the axle to be lifted of the said broken-down vehicle, so as to allow the arms to pass between the wheels.

More particularly, in the operating position, lateral extensions 39 are positioned under the wheel to be lifted (Fig. 2d) and they cooperate with arms 38, bar 37 and slides 43 in order to lift a pair of wheels, mounted on a same axle, of a broken-down vehicle.

Preferably, in the travelling position, slides 43 are positioned in the central portion of bar 37 and are adjusted so as to bring lateral extensions 39 and arms 38 in contact with bar 37 and slides 43, so as to minimise the bulk of fork assembly 36.

Preferably, arms 38 are brought in contact with bar 37 by an outward rotation, and they are equipped with a stop member in order to be locked in the operating position. In preferred manner, lateral extensions 39 and the ends of bar 37 are so shaped as to allow them to be superimposed when fork assembly 36 is in the travelling position or to be inserted into one another. For instance, lateral extensions 39 have a surface with the same inclination as that of the profile of the ends of bar 37 (Fig. 1).

Preferably, system 10 includes, for instance on the end of longitudinal portion 26 of movable body 14, a pair of wings 46 (Fig. 1) projecting from two laterally opposite sides, and lifting actuators are hinged in correspondence of said wings.

Each lifting actuator is hinged on the one side to the support structure and on the other side to movable body 14. Moreover, each lifting actuator is arranged to control the angular position of movable body 14 with respect to the support structure, for instance about lateral axis Y-Y.

The operation of system 10 and equipment or fork assembly 36 illustrated in the drawings will now be described.

Referring to Fig. 2a, fork assembly 36 is in travelling position and, in order to be able to intervene on the broken-down vehicle, system 10 is brought to a lowered arrangement.

In such an arrangement, movable body 14 together with fork assembly 36 is for instance overturned about axis Y-Y so as to be located near the road surface, in order to be able to pass under the vehicle to be lifted, and arms 38 are manually rotated inwards, about hinges 51 (Fig. 2b), so as to be oriented in longitudinal direction.

Once arms 38 have been rotated, slides 43 are positioned in the central portion of bar 37 and arms 38 are so spaced apart that they can pass between the wheels of the vehicle to be recovered (Fig. 2c).

In such an arrangement, longitudinal extendable device 20 may be extended, by operating the actuators, to an at least partly extended condition, so as to allow placing fork assembly 36 under the axle of the vehicle to be recovered, with arms 38 between the vehicle wheels, in the most suitable manner for lifting and towing the broken-down vehicle.

In a first step, longitudinal extendable device 20 is extended so as to bring bar 37 in contact with the wheels. The bar is then moved away by the distance necessary to allow slides 43 to pass between the wheels and bar 37.

In a second step, slides 43, operated by actuator 44, move outwards, until bringing arms 38 into contact with the wheel sides and bringing lateral extensions 39 under the wheels, in the most suitable position for lifting the vehicle (Fig. 2d).

In case a damaged vehicle has lost one or more wheels, the arms directly lift the vehicle body.

System 10 for recovering vehicles according to the invention has the advantage that it reduces the bulk of the help vehicle, both when fork assembly 36 is in the travelling position, with arms 38 oriented in lateral direction and parallel to bar 37, and when it is in operating position, where the arms are oriented in longitudinal direction.

Actually, fork assembly 36 of the system according to the invention, in the operating position, has the arms located between the wheels of the broken-down vehicle to be loaded, thereby limiting the lateral size and thus allowing travelling on road sections where manoeuvring spaces are limited.

Another advantage is that it is possible to operate the system according to the invention without need for an operator's intervention under the vehicle to be recovered, thereby considerably increasing the safety, the practicality of use and the operation speed.

Another advantage is that the system according to the invention has a more robust structure than the prior art systems, since it does not require reduced weight arms.

Actually, the arms of the prior art systems have to be manually displaced and thus they have weight limits, whereas the arms of the fork assembly of the system according to the invention have to be manually rotated about hinges 51, but they are not to be lifted or displaced, whereby they may have a more robust structure, with a greater weight.

Of course, while leaving the principle of the invention unchanged, the embodiments and the construction details can be widely changed with respect to what has been described and shown by way of non limiting example only, without thereby departing from the scope of the invention as defined in the appended claims.

## Claims

1. Equipment (36), in particular for recovering a broken-down vehicle, comprising:
- a bar (37) oriented in lateral direction and connectable with a movable body (14);
- two slides (43), slidably mounted on said bar (37);
- at least two arms (38), rotatably mounted on said slides (43) and arranged to cooperate
with the bar (37) in order to lift a broken-down vehicle;
**characterised in that** the bar (37) includes an actuating member (44) with a first end connected to one slide (43) and the other end connected to the second slide (43) and arranged to cause the displacement thereof in order to adjust the positions of the arms (38) relative to the vehicle to be lifted; and
**characterised in that** the arms (38) are arranged to rotate between a first travelling position in which they are oriented in lateral direction, parallel to the bar (37), and a second operating position in which they are oriented in a longitudinal direction .

2. The equipment as claimed in claim 1, **characterised in that** said actuating member (44) is a linear actuator.

3. The equipment as claimed in any preceding claim, **characterised in that** said arm (38) includes a lateral extension (39) arranged to be positioned under the wheel of the vehicle to be lifted.

4. The equipment as claimed in claim 3, **characterised in that** the lateral extension (39) and the end of the bar (37) are so shaped as to allow them to be superimposed when the arm (38) is rotated towards the bar (37).

5. The equipment as claimed in any preceding claim, **characterised in that** said arm (38) is rotatable about a transverse axis (Z1-Z1, Z2-Z2), substantially transversal to the axis of the bar (37).

6. The equipment as claimed in any preceding claim, **characterised in that** said arm (38) is pivotally connected to the slide (43) through a hinge (51).

7. The equipment as claimed in any preceding claim, **characterised in that** the bar (37) is mounted so as to be rotatable relative to the movable body (14) about a transverse axis (Z-Z).

8. The equipment as claimed in any preceding claim, **characterised in that** it includes a pair of arms (38) arranged to cooperate with the bar (37) in order to lift a pair of wheels, mounted on the same axle, of a broken-down vehicle.

9. The equipment as claimed in claim 8, **characterised in that** each said arm (38) is rotatably mounted on a respective slide (43) and is arranged to rotate about a respective transverse axis (Z1-Z1, Z2-Z2), substantially transversal to the axis of the bar (37).

10. A system (10) in particular for recovering a broken-down vehicle, comprising:
- a movable body (14) that can be associated with a support structure;
**characterised in that** said system (10) further comprises an equipment as claimed in any preceding claim, connected to said movable body (14).

11. The system as claimed in claim 10, **characterised in that** said equipment (36) is connected to the movable body (14) via a longitudinal extendable device (20).

12. The system as claimed in claim 11, **characterised in that** said longitudinal extendable device (20) is arranged to be extended in controlled way from a retracted condition to an extended condition in a longitudinal direction relative to said movable body (14).

13. The system as claimed in claim 11 or 12, **characterised in that** said longitudinal extendable device (20) is a telescopic device.

14. The system as claimed in claim 13, **characterised in that** said movable body (14) has a longitudinal hollow portion (26) and said longitudinal extendable device (20) is slidable within said longitudinal portion (26).

15. The system as claimed in any of claims 10 to 14, **characterised in that** said equipment is mounted so as to be rotatable relative to the movable body (14) about a transverse axis (Z-Z).

## Patentansprüche

1. Ausrüstung (36), insbesondere zur Bergung eines liegengebliebenen Fahrzeugs, umfassend:
- eine Stange (37), die in lateraler Richtung ausgerichtet ist und mit einem beweglichen Körper (14) verbindbar ist;
- zwei Schieber (43), die verschiebbar an der Stange (37) montiert sind;
- mindestens zwei Arme (38), die drehbar an den Schiebern (43) montiert sind und so angeordnet sind, dass sie mit der Stange (37) zusammenwirken, um ein liegengebliebenes Fahrzeug anzuheben;
**dadurch gekennzeichnet, dass** die Stange (37) ein Stellglied (44) mit einem ersten Ende, das mit dem einen Schieber (43) verbunden ist, und einem zweiten Ende, das mit dem zweiten Schieber (43) verbunden ist, aufweist und so angeordnet ist, dass es deren Verlagerung bewirkt, um die Positionen der Arme (38) in Bezug auf das anzuhebende Fahrzeug anzupassen; und
**dadurch gekennzeichnet, dass** die Arme (38) so angeordnet sind, dass sie sich zwischen einer ersten Fahrposition, in der sie in lateraler Richtung, parallel zur Stange (37), ausgerichtet sind, und einer zweiten Betriebsposition, in der sie in einer Längsrichtung ausgerichtet sind, drehen können.

2. Ausrüstung nach Anspruch 1, **dadurch gekennzeichnet, dass** das Stellglied (44) ein lineares Stellglied ist.

3. Ausrüstung nach einem der vorangehenden Ansprüche, **dadurch gekennzeichnet, dass** der Arm (38) einen seitlichen Fortsatz (39) aufweist, der dafür vorgesehen ist, unterhalb des Rades des anzuhebenden Fahrzeugs positioniert zu werden.

4. Ausrüstung nach Anspruch 3, **dadurch gekennzeichnet, dass** der seitliche Fortsatz (39) und das Ende der Stange (37) so geformt sind, dass sie übereinander angeordnet werden können, wenn der Arm (38) zur Stange (37) hin gedreht wird.

5. Ausrüstung nach einem der vorangehenden Ansprüche, **dadurch gekennzeichnet, dass** der Arm (38) um eine Querachse (Z1-Z1, Z2-Z2), im Wesentlichen quer zur Achse der Stange (37), drehbar ist.

6. Ausrüstung nach einem der vorangehenden Ansprüche, **dadurch gekennzeichnet, dass** der Arm (38) über ein Gelenk (51) schwenkbar mit dem Schieber (43) verbunden ist.

7. Ausrüstung nach einem der vorangehenden Ansprüche, **dadurch gekennzeichnet, dass** die Stange (37) so montiert ist, dass sie in Bezug auf den beweglichen Körper (14) um eine Querachse (Z-Z) drehbar ist.

8. Ausrüstung nach einem der vorangehenden Ansprüche, **dadurch gekennzeichnet, dass** sie ein Paar Arme (38) aufweist, die so angeordnet sind, dass sie mit der Stange (37) zusammenwirken, um ein Paar auf der gleichen Radachse montierte Räder eines liegengebliebenen Fahrzeugs anzuheben.

9. Ausrüstung nach Anspruch 8, **dadurch gekennzeichnet, dass** jeder der Arme (38) drehbar an einem entsprechenden Schieber (43) montiert und so angeordnet ist, dass er sich im Wesentlichen quer zur Achse der Stange (37) um eine entsprechende Querachse (Z1-Z1, Z2-Z2) drehen kann.

10. System (10), insbesondere zur Bergung eines liegengebliebenen Fahrzeugs, umfassend:
- einen beweglichen Körper (14), der mit einer Trägerstruktur verbunden werden kann;
**dadurch gekennzeichnet, dass** das System (10) ferner eine Ausrüstung nach einem der vorangehenden Ansprüche umfasst, die mit dem beweglichen Körper (14) verbunden ist.

11. System nach Anspruch 10, **dadurch gekennzeichnet, dass** die Ausrüstung (36) über eine in Längsrichtung verlängerbare Vorrichtung (20) mit dem beweglichen Körper (14) verbunden ist.

12. System nach Anspruch 11, **dadurch gekennzeichnet, dass** die in Längsrichtung verlängerbare Vorrichtung (20) so ausgebildet ist, dass sie in Bezug auf den beweglichen Körper (14) kontrolliert in Längsrichtung aus einem eingefahrenen Zustand in einen ausgefahrenen Zustand verlängert werden kann.

13. System nach Anspruch 11 oder 12, **dadurch gekennzeichnet, dass** die in Längsrichtung verlängerbare Vorrichtung (20) eine ausziehbare Vorrichtung ist.

14. System nach Anspruch 13, **dadurch gekennzeichnet, dass** der bewegliche Körper (14) einen länglichen, hohlen Abschnitt (26) aufweist und dass die in Längsrichtung verlängerbare Vorrichtung (20) in dem länglichen Abschnitt (26) gleiten kann.

15. System nach einem der Ansprüche 10 bis 14, **dadurch gekennzeichnet, dass** die Ausrüstung so montiert ist, dass sie in Bezug auf den beweglichen Körper (14) um eine Querachse (Z-Z) drehbar ist.

## Revendications

1. Equipement (36), en particulier pour récupérer un véhicule en panne, comportant :
- une barre (37) orientée dans une direction latérale et pouvant être raccordée à un corps mobile (14) ;
- deux glissières (43), montées de façon coulissante sur ladite barre (37) ;
- au moins deux bras (38) montés libre en rotation sur lesdites glissières (43) et agencés afin de coopérer avec la barre (37) en vue de lever un véhicule en panne ; **caractérisé en ce que** la barre (37) comporte un organe de manoeuvre (44) ayant une première extrémité raccordée à une glissière (43) et l'autre extrémité raccordée à la seconde glissière (43) et agencé pour entrainer leur déplacement afin d'ajuster les positions des bras (38) par rapport au véhicule à lever ; et
**caractérisé en ce que** les bras (38) sont conçus pour tourner entre une première position de déplacement dans laquelle ils sont orientés dans une direction latérale, parallèle à la barre (37), et une seconde position de fonctionnement dans laquelle ils sont orientés dans une direction longitudinale.

2. Equipement selon la revendication 1, **caractérisé en ce que** ledit organe de manoeuvre (44) est un actionneur linéaire.

3. Equipement selon l'une quelconque des revendications précédentes, **caractérisé en ce que** ledit bras (38) comporte une extension latérale (39) conçue pour être positionnée sous la roue du véhicule à lever.

4. Equipement selon la revendication 3, **caractérisé en ce que** l'extension latérale (39) et l'extrémité de la barre (37) sont configurées de façon à leur permettre d'être superposées lorsque le bras (38) est tourné vers la barre (37).

5. Equipement selon l'une quelconque des revendications précédentes, **caractérisé en ce que** ledit bras (38) peut tourner autour d'un axe transversal (Z1-Z1, Z2-Z2), essentiellement transversal à l'axe de la barre (37).

6. Equipement selon l'une quelconque des revendications précédentes, **caractérisé en ce que** ledit bras (38) est relié de manière pivotable à la glissière (43) par l'intermédiaire d'une charnière (51).

7. Equipement selon l'une quelconque des revendications précédentes, **caractérisé en ce que** la barre (37) est montée de façon à pouvoir tourner par rapport au corps mobile (14) autour d'un axe transversal (Z-Z).

8. Equipement selon l'une quelconque des revendications précédentes, **caractérisé en ce qu'**il comporte une paire de bras (38) conçus pour coopérer avec la barre (37) afin de lever une paire de roues, montées sur le même essieu, d'un véhicule en panne.

9. Equipement selon la revendication 8, **caractérisé en ce que** chaque dit bras (38) est monté libre en rotation sur une glissière respective (43) et est agencé pour tourner autour d'un axe transversal respectif (Z1-Z1, Z2-Z2), essentiellement transversal à l'axe de la barre (37).

10. Système (10), en particulier pour récupérer un véhicule en panne, comprenant :
- un corps mobile (14) qui peut être associé à une structure de support ;
**caractérisé en ce que** ledit système (10) comprend, de plus, un équipement selon l'une quelconque des revendications précédentes, raccordé au dit corps mobile (14).

11. Système selon la revendication 10, **caractérisé en ce que** ledit équipement (36) est raccordé au corps mobile (14) par l'intermédiaire d'un dispositif extensible longitudinalement (20).

12. Système selon la revendication 11, **caractérisé en ce que** ledit dispositif extensible longitudinalement (20) est conçu pour être déployé de manière contrôlée d'un état rétracté à un état déployé dans une direction longitudinale par rapport au dit corps mobile (14).

13. Système selon la revendication 11 ou 12, **caractérisé en ce que** ledit dispositif extensible longitudinalement (20) est un dispositif télescopique.

14. Système selon la revendication 13, **caractérisé en ce que** ledit corps mobile (14) comporte une partie longitudinale creuse (26) et **en ce que** ledit dispositif extensible longitudinalement (20) peut coulisser à l'intérieur de ladite partie longitudinale (26).

15. Système selon l'une quelconque des revendications 10 à 14, **caractérisé en ce que** ledit équipement est monté de façon à pouvoir tourner par rapport au corps mobile (14) autour d'un axe transversal (Z-Z).
